# EUROPEAN PATENT SPECIFICATION

(11) **EP 3 401 602 B1**
(45) Date of publication and mention of the grant of the patent: **30.06.2021**
(21) Application number: 18171676.2
(22) Date of filing: 10.05.2018
(51) Int. Cl.: F23R 3/10, F23R 3/34, F23D 14/64, F23R 3/00

(54) **FUEL INJECTORS FOR USE IN GAS TURBINE COMBUSTOR**
KRAFTSTOFFINJEKTOREN ZUR VERWENDUNG IN EINER GASTURBINENBRENNKAMMER
INJECTEURS DE CARBURANT À UTILISER DANS UNE CHAMBRE DE COMBUSTION DE TURBINE À GAZ

(30) Priority: 12.05.2017 US 201715593561
(43) Date of publication of application: 14.11.2018
(73) Proprietor: General Electric Company, Schenectady, NY 12345 (US)
(72) Inventor: GUBBA, Sreenivasa Rao, 560066 Bangalore, Karnataka (IN); HUGHES, Michael John, Greenville, SC South Carolina 29615 (US); AGARWAL, Krishna Kant, 560066 Bangalore (IN)
(74) Representative: BRP Renaud & Partner mbB Rechtsanwälte Patentanwälte Steuerberater

(56) References cited:
- EP-A1- 2 208 934
- EP-A1- 2 570 728
- EP-A1- 3 115 693
- WO-A1-2013/022367
- US-A1- 2009 113 895
- US-A1- 2011 030 375
- US-A1- 2016 047 317
- US-B1- 6 868 676

## Description

### TECHNICAL FIELD

The present disclosure relates generally to fuel injectors for use with an axial fuel staging (AFS) system associated with a combustor for gas turbines.

### BACKGROUND

At least some known gas turbine assemblies include a compressor, a combustor, and a turbine. Gas (e.g., ambient air) flows through the compressor, where the gas is compressed before delivery to one or more combustors. In each combustor, the compressed air is combined with fuel and ignited to generate combustion gases. The combustion gases are channeled from each combustor to and through the turbine, thereby driving the turbine, which, in turn, powers an electrical generator coupled to the turbine. The turbine may also drive the compressor by means of a common shaft or rotor.

In some combustors, the generation of combustion gases occurs at two, axially spaced stages. Such combustors are know from US-2016/047317 A1 and are referred to herein as including an "axial fuel staging" (AFS) system, which delivers fuel and an oxidant to one or more downstream fuel injectors. In a combustor with an AFS system, a primary fuel nozzle at an upstream end of the combustor injects fuel and air (or a fuel/air mixture) in an axial direction into a primary combustion zone, and an AFS fuel injector located at a position downstream of the primary fuel nozzle injects fuel and air (or a second fuel/air mixture) in a radial direction into a secondary combustion zone downstream of the primary combustion zone. In some cases, it is desirable to introduce the fuel and air into the secondary combustion zone as a mixture. Therefore, the mixing capability of the AFS injector influences the overall operating efficiency and/or emissions of the gas turbine.

### SUMMARY

The present disclosure is directed to an AFS fuel injector for delivering a mixture of fuel and air in a radial direction into a combustor, thereby producing a secondary combustion zone.

A fuel injector includes a frame and a pair of fuel injection bodies coupled to the frame. The frame has interior sides that define an opening for passage of a first fluid. Inlet flow paths for the first fluid are defined at least between the interior sides of the frame and the respective fuel injection bodies. Each fuel injection body defines a fuel plenum and includes at least one fuel injection surface that defines a plurality of fuel injection holes in communication with the fuel plenum. An outlet member is located downstream of, and in fluid communication, with the inlet flow paths. The outlet member is configured to produce discrete, or separate, outlet flow paths exiting the outlet member via struts.

### BRIEF DESCRIPTION OF THE DRAWINGS

A full and enabling disclosure of the present products and methods, including the best mode thereof, directed to one of ordinary skill in the art, is set forth in the specification, which makes reference to the appended figures, in which:
FIG. 1 is a schematic cross-sectional side view of a combustion can, including a downstream fuel injector according to the present disclosure;
FIG. 2 is a perspective view of a fuel injector having a pair of fuel injection bodies,
according to one aspect of the present disclosure;
FIG. 3 is a bottom perspective view of the fuel injector of FIG. 2;
FIG. 4 is a cross-sectional perspective view of the fuel injector of FIG. 2;
FIG. 5 is a perspective view of a fuel injector having three fuel injection bodies, according to another aspect of the present disclosure;
FIG. 6 is a bottom perspective view of the fuel injector of FIG. 5, according to one embodiment;
FIG. 7 is a cross-sectional perspective view of the fuel injector of FIGS. 5 and 6;
FIG. 8 is a bottom perspective view of the fuel injector of FIG. 5, according to another embodiment;
FIG. 9 is a cross-sectional perspective view of the fuel injector of FIGS. 5 and 8;
FIG. 10 is a cross-sectional view of the fuel injector of FIGS. 5 and 8;
FIG. 11 is a cross-sectional view of the fuel injector of FIG. 10, as taken along line 11-11;
FIG. 12 is a cross-sectional view of the fuel injector of FIG. 10, as taken along line 12-12;
FIG. 13 is a schematic representation of an alternate fuel injector having a pair of aligned fuel injection bodies, according to an aspect of the present disclosure;
FIG. 14 is a cross-sectional view of the fuel injector of FIG. 13;
FIG. 15 is a schematic representation of outlet ducts of the fuel injector of FIG. 13;
FIG. 16 is a schematic representation of an alternate fuel injector having a pair of angled fuel injection bodies, according to an aspect of the present disclosure;
FIG. 17 is a schematic representation of outlet ducts of the fuel injector of FIG. 16;
FIG. 18 is a schematic representation of an alternate fuel injector having a pair of axially staggered, parallel fuel injection bodies, according to an aspect of the present disclosure; and
FIG. 19 is a schematic representation of outlet ducts of the fuel injector of FIG. 18.

### DETAILED DESCRIPTION

The following detailed description illustrates various fuel injectors, their component parts, and methods of fabricating the same, by way of example and not limitation. The description enables one of ordinary skill in the art to make and use the fuel injectors. The description provides several embodiments of the fuel injectors, including what is presently believed to be the best modes of making and using the fuel injectors. An exemplary fuel injector is described herein as being used within a combustor of a heavy-duty gas turbine assembly coupled to a generator for electrical power generation. However, it is contemplated that the fuel injectors described herein have general application to a broad range of systems in a variety of fields other than electrical power generation.

As used herein, the term "radius" (or any variation thereof) refers to a dimension extending outwardly from a center of any suitable shape (e.g., a square, a rectangle, a triangle, etc.) and is not limited to a dimension extending outwardly from a center of a circular shape. Similarly, as used herein, the term "circumference" (or any variation thereof) refers to a dimension extending around a center of any suitable shape (e.g., a square, a rectangle, a triangle, etc.) and is not limited to a dimension extending around a center of a circular shape.

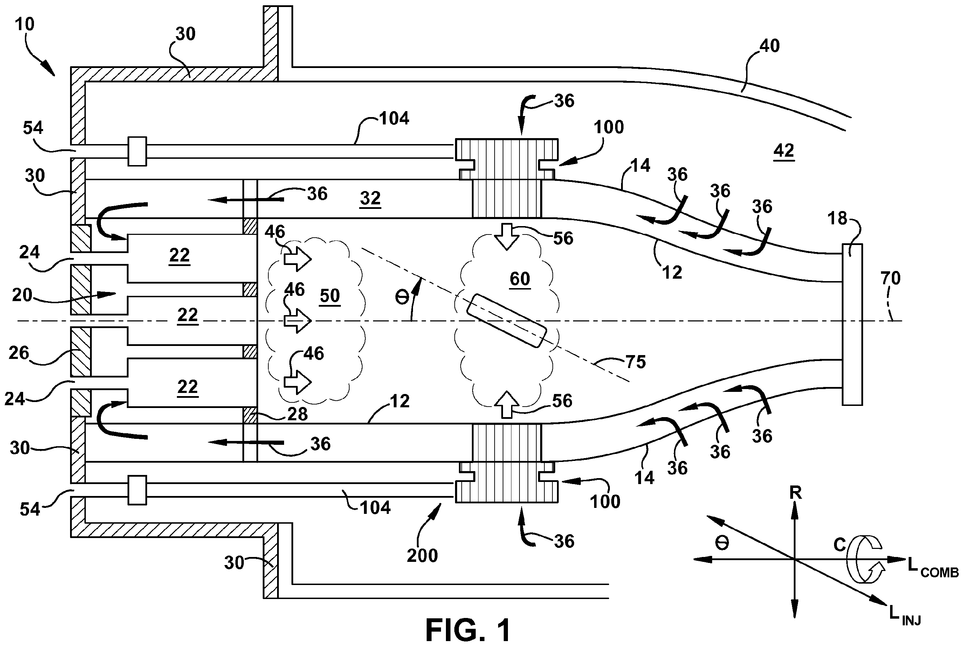

FIG. 1 is a schematic representation of a combustion can 10, as may be included in a can annular combustion system for a heavy duty gas turbine. In a can annular combustion system, a plurality of combustion cans 10 (e.g., 8, 10, 12, 14, 16, or more) are positioned in an annular array about a rotor that connects a compressor to a turbine. The turbine may be operably connected (e.g., by the rotor) to a generator for producing electrical power.

In FIG. 1, the combustion can 10 includes a liner 12 that contains and conveys combustion gases 66 to the turbine. The liner 12 may have a cylindrical liner portion and a tapered transition portion that is separate from the cylindrical liner portion, as in many conventional combustion systems. Alternately, the liner 12 may have a unified body (or "unibody") construction, in which the cylindrical portion and the tapered portion are integrated with one another in a single piece. Thus, any discussion of the liner 12 herein is intended to encompass both conventional combustion systems having a separate liner and transition piece and those combustion systems having a unibody liner. Moreover, the present disclosure is equally applicable to those combustion systems in which the transition piece and the stage one nozzle of the turbine are integrated into a single unit, sometimes referred to as a "transition nozzle" or an "integrated exit piece."

The liner 12 is at least partially surrounded by an outer sleeve 14, which is spaced radially outward of the liner 12 to define an annulus 32 between the liner 12 and the outer sleeve 14. The outer sleeve 14 may include a flow sleeve portion at the forward end and an impingement sleeve portion at the aft end, as in many conventional combustion systems. Alternately, the outer sleeve 14 may have a unified body (or "unisleeve") construction, in which the flow sleeve portion and the impingement sleeve portion are integrated with one another in the axial direction. As before, any discussion of the outer sleeve 14 herein is intended to encompass both convention combustion systems having a separate flow sleeve and impingement sleeve and combustion systems having a unisleeve outer sleeve.

A head end portion 20 of the combustion can 10 includes one or more fuel nozzles 22. The fuel nozzles 22 have a fuel inlet 24 at an upstream (or inlet) end. The fuel inlets 24 may be formed through an end cover 26 at a forward end of the combustion can 10. The downstream (or outlet) ends of the fuel nozzles 22 extend through a combustor cap 28 that radially spans the head end portion 20 and that separates the head end 20 from a primary combustion zone 50.

The head end portion 20 of the combustion can 10 is at least partially surrounded by a forward casing 30, which is physically coupled and fluidly connected to a compressor discharge case 40. The compressor discharge case 40 is fluidly connected to an outlet of the compressor (not shown) and defines a pressurized air plenum 42 that surrounds at least a portion of the combustion can 10. Air 36 flows from the compressor discharge case 40 into the annulus 32 at an aft end of the combustion can. Because the annulus 32 is fluidly coupled to the head end portion 20, the air flow 36 travels upstream from the aft end of the combustion can 10 to the head end portion 20, where the air flow 36 reverses direction and enters the fuel nozzles 22.

Fuel and air are introduced by the fuel nozzles 22 into the primary combustion zone 50 at a forward end of the liner 12, where the fuel and air are combusted to form combustion gases 46. In one embodiment, the fuel and air are mixed within the fuel nozzles 22 (e.g., in a premixed fuel nozzle). In other embodiments, the fuel and air may be separately introduced into the primary combustion zone 50 and mixed within the primary combustion zone 50 (e.g., as may occur with a diffusion nozzle). Reference made herein to a "first fuel/air mixture" should be interpreted as describing both a premixed fuel/air mixture and a diffusion-type fuel/air mixture, either of which maybe produced by fuel nozzles 22.

The combustion gases 46 travel downstream toward an aft end of the combustion can 10, represented by an aft frame 18. Additional fuel and air are introduced, as a second fuel/air mixture 56, by one or more fuel injectors 100 into a secondary combustion zone 60, where the fuel and air 56 are ignited by the combustion gases 46 to form a combined combustion gas product stream 66. Such a combustion system having axially separated combustion zones is described as an "axial fuel staging" (AFS) system 200, and the downstream injectors 100 maybe referred to as "AFS injectors."

In the embodiment shown, fuel for each AFS injector 100 is supplied from the head end of the combustion can 10, via a fuel inlet 54. Each fuel inlet 54 is coupled to a fuel supply line 104, which is coupled to a respective AFS injector 100. It should be understood that other methods of delivering fuel to the AFS injectors 100 may be employed, including supplying fuel from a ring manifold or from radially oriented fuel supply lines that extend through the compressor discharge case 40.

FIG. 1 further shows that the AFS injectors 100 may optionally be oriented at an angle θ (theta) relative to the longitudinal center line 70 of the combustion can 10. In the embodiment shown, the leading edge portion of the injector 100 (that is, the portion of the injector 100 located most closely to the head end) is oriented away from the center line 70 of the combustion can 10, while the trailing edge portion of the injector 100 is oriented toward the center line 70 of the combustion can 10. The angle θ, defined between the longitudinal axis 75 of the injector 100 and the center line 70, may be between 0 degrees and 45 degrees, between 1 degree and 30 degrees, between 1 degree and 20 degrees, or between 1 degree and 10 degrees, or any intermediate value therebetween. In other embodiments, it may be desirable to orient the injector 100, such that the leading edge portion is proximate the center line 70, and the trailing edge portion is distal to the center line 70.

The injectors 100 inject the second fuel/air mixture 56, in a radial direction, through the combustion liner 12, thereby forming a secondary combustion zone 60 axially spaced from the primary combustion zone 50. The combined hot gases 66 from the primary and secondary combustion zones travel downstream through the aft end 18 of the combustor can 10 and into the turbine section, where the combustion gases 66 are expanded to drive the turbine.

Notably, to enhance the operating efficiency of the gas turbine and to reduce emissions, it is desirable for the injector 100 to thoroughly mix fuel and compressed gas to form the second fuel/air mixture 56 and to quickly introduce the fuel/air mixture 56 as a cross-flow into the flow of combustion gases 46. Thus, the injector embodiments described below facilitate improved mixing and increase the surface area of the flame produced by the injector 100. As a result, a higher volume of fuel may be introduced via the injectors 100, and the length of the liner 12 may be shortened.

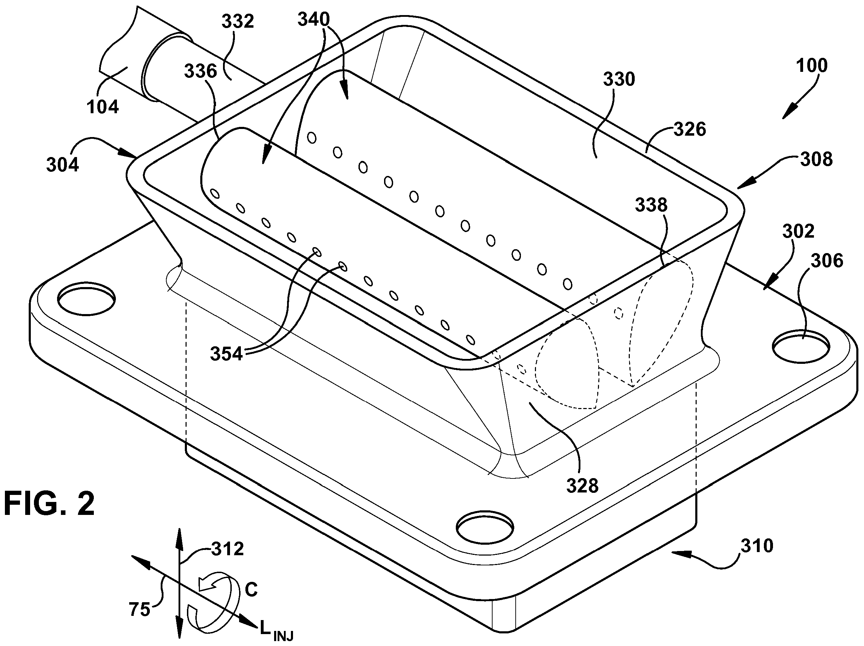

FIGS. 2, 3, and 4 illustrate an exemplary fuel injector 100 for use in the AFS system 200 described above. In the exemplary embodiment, the fuel injector 100 includes a mounting flange 302, a frame 304, and an outlet member 310 that are coupled together. In one embodiment, the mounting flange 302, the frame 304, and the outlet member 310 are manufactured as a single-piece structure (that is, are formed integrally with one another). Alternately, in other embodiments, the flange 302 may not be formed integrally with the frame 304 and/or the outlet 310 (e.g., the flange 302 maybe coupled to the frame 304 and/or the outlet 302 using suitable fasteners or joining techniques). Moreover, the frame 304 and the outlet 302 maybe made as an integrated, single-piece unit, which is separately joined to the flange 302 (e.g., by interlocking members).

The flange 302, which is generally planar, defines a plurality of apertures 306 that are each sized to receive a fastener (not shown) for coupling the fuel injector 100 to the outer sleeve 14. The fuel injector 100 may have any suitable structure in lieu of, or in combination with, the flange 302 (e.g., a boss) that enables the frame 304 to be coupled to the outer sleeve 14, such that the injector 100 functions in the manner described herein.

The frame 304 defines the inlet portion of the fuel injector 100. The frame 304 includes a first pair of oppositely disposed side walls 326 and a second pair of oppositely disposed end walls 328. The side walls 326 are longer than the end walls 328, thus providing the frame 304 with a generally rectangular profile in the axial direction. The frame 304 has a generally trapezoid-shaped profile in the radial direction (that is, side walls 326 are angled with respect to the flange 302). The frame 304 has a first end 318 proximal to the flange 302 ("a proximal end") and a second end 320 distal to the flange 302 ("a distal end"). The first ends 318 of the side walls 326 are spaced further from a longitudinal axis of the fuel injector 100 (L*_{INJ}*) than the second ends of the side walls 326, when compared in their respective longitudinal planes.

The outlet member 310 extends radially from the flange 302 on a side opposite the frame 304. The outlet member 310 provides fluid communication between the frame 304 and the interior of the liner 12 and delivers the second fuel/air mixture 56 into the secondary combustion zone 60. The outlet member 310 has a first end 322 proximal to the flange 302 and a second end 324 distal to the flange 302 (and proximal to the liner 12), when the fuel injector 100 is installed. Further, when the fuel injector 100 is installed, the outlet member 310 is located within the annulus 32 between the liner 12 and the outer sleeve 14, such that the flange 302 is located on an outer surface of the outer sleeve 14 (as shown in FIG. 1).

In the illustrated embodiment, the outlet member 310 includes a pair of struts 360 extending longitudinally across the outlet member 310. The struts 360 have an aerodynamic shape that diverges relative to the direction of air flow through the injector 100. That is, the struts have a leading edge 362 proximal the fuel injection bodies 340 and a trailing edge 363 near the distal end 324 of the outlet member 310. The struts 360 and the outlet member 310 define three slot-shaped outlet flow paths 311 ("outlet slots") through which the fuel/air mixture 56 is conveyed into the combustor 10. The outlet flow paths 311 are discrete, or separate, from one another.

The fuel/air mixture is conveyed along multiple parallel injection axes (generally labeled 312 in FIG. 2). The injection axes 312 are generally linear. The injection axes 312 represent a radial dimension "R" with respect to the longitudinal axis 70 of the combustion can 10 (L*_{COMB}*). The fuel injector 100 further includes a longitudinal dimension (represented as axis *L_{INJ}*), which is generally perpendicular to the injection axis 312, and a circumferential dimension "C" extending about the longitudinal axis L*_{INJ}.* As described above, the longitudinal axis L*_{INJ}* of the injector 100 may be coincident with the longitudinal axis of the combustion can L*_{COMB},* or maybe off-set from the longitudinal axis of the combustion can L*_{COMB}.*

Thus, the frame 304 extends radially outward from the flange 302 in a first direction, and the outlet member 310 extends radially inward from the flange 302 in a second direction opposite the first direction. The flange 302 extends circumferentially around (that is, circumscribes) the frame 304. The frame 304 and the outlet member 310 extend circumferentially about the injection axes 312 and are in flow communication with one another across the flange 302.

Although the embodiments illustrated herein present the flange 302 as being located between the frame 304 and the outlet member 310, it should be understood that the flange 302 may be located at some other location or in some other suitable orientation. For instance, the frame 304 and the outlet member 310 may not extend from the flange 302 in generally opposite directions.

In one exemplary embodiment, the distal end 320 of inlet member 308 may be wider than the proximal end 318 of the frame 304, such that the frame 304 is at least partly tapered (or funnel-shaped) between the distal end 320 and the proximal end 318. Said differently, in the exemplary embodiment described above, the sides 326 converge in thickness from the distal end 320 to the proximal end 318.

Further, as shown in FIGS. 2, 3, and 4, the side walls 326 of the frame 304 are oriented at an angle with respect to the flange 302, thus causing the frame 304 to converge from the distal end 320 to the proximal end 318 of the side walls 326. In some embodiments, the end walls 328 may also or instead be oriented at an angle with respect to the flange 302. The side walls 326 and the end walls 328 have a generally linear cross-sectional profile. In other embodiments, the side walls 326 and the end walls 328 may have any suitable cross-sectional profile(s) that enables the frame 304 to be at least partly convergent (i.e., tapered) between distal end 320 and proximal end 318 (e.g., at least one side wall 326 may have a cross-sectional profile that extends arcuately between ends 320 and 318). Alternatively, the frame 304 may not taper between distal end 320 and proximal end 318 (e.g., in other embodiments, when the side walls 326 and the end walls 328 may each have a substantially linear cross-sectional profile that are oriented substantially parallel to the central injection axis 312).

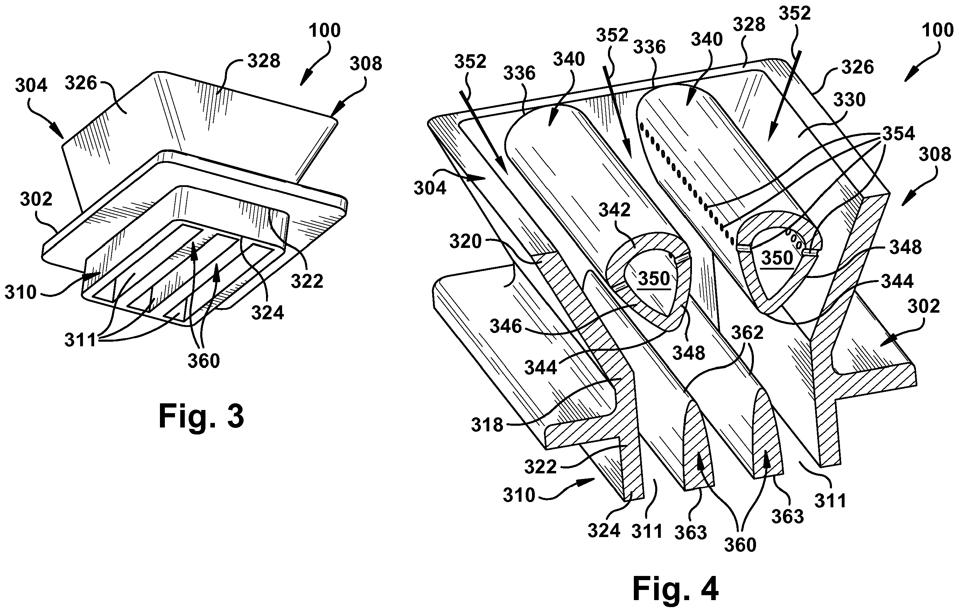

In the exemplary embodiment, the fuel injector 100 further includes a conduit fitting 332 (shown in FIG. 2) and a pair of fuel injection bodies 340 (shown in FIGS. 2 and 4). The conduit fitting 332 is formed integrally with one of the end walls 328 of the frame 304. In one embodiment, the conduit fitting 332 extends generally outward along the longitudinal axis (L*_{INJ}*) of the injector 100. The conduit fitting 332 is connected to the fuel supply line 104 (also shown in FIG. 1) and receives fuel therefrom. The conduit fitting 332 may have any suitable size and shape, and may be formed integrally with, or coupled to, any suitable portion(s) of the frame 304 that enable the conduit fitting 332 to function as described herein (e.g., the conduit fitting 332 may be formed integrally with a side wall 326 in some embodiments).

Each fuel injection body 340 has a first end 336 that is formed integrally with the end wall 328 from which the conduit fitting 332 projects and a second end 338 that is formed integrally with the end wall 328 on the opposite end of the fuel injector 100 (i.e., the downstream end, relative to the flow of combustion products 60 through the combustor can 10). Each fuel injection body 340, which extends generally linearly across the frame 304 between the end walls 328, defines an internal fuel plenum 350 that is in fluid communication with the conduit fitting 332. In other embodiments, the fuel injection bodies 340 may extend across the frame 304 from any suitable portions of the frame 304 that enable the fuel injection bodies 340 to function as described herein (e.g., the fuel injection bodies 340 may extend between the side walls 326). Alternately, or additionally, the fuel injection bodies 340 may define an arcuate shape between oppositely disposed walls (326 or 328).

As mentioned above, each fuel injection body 340 has a plurality of surfaces that form a hollow structure that defines the internal plenum 350 and that extends between the end walls 328 of the frame 304. When viewed in a cross-section taken from perpendicular to the longitudinal axis L*_{INJ}*, each fuel injection body 340 (in the present embodiment) generally has the shape of an inverted teardrop with a curved leading edge 342, an oppositely disposed trailing edge 344, and a pair of opposing fuel injection surfaces 346, 348 that extend from the leading edge 342 to the trailing edge 344. The fuel plenum 350 does not extend into the flange 302 or within the frame 304 (other than the fluid communication through the end wall 328 into the conduit fitting 332).

Each fuel injection surface 346, 348 includes a plurality of fuel injection ports 354 that provide fluid communication between the internal plenum 350 and one of the respective flow paths 352. The fuel injection ports 354 are spaced along the length of the fuel injection surfaces 346, 348, for example, in any manner (e.g., one or more rows) suitable to enable the fuel injection body 340 to function as described herein.

Each fuel injection body 340 is oriented such that the leading edge 342 is proximate the distal end 320 of the side walls 326 (i.e., the leading edge 342 faces away from the proximal end 318 of the side walls 326). The trailing edge 344 is located proximate the proximal end 318 of the side walls 326 (i.e., the trailing edge 344 faces away from the distal end 320 of the side walls 326). Thus, the trailing edge 344 is in closer proximity to the flange 302 than is the leading edge 342.

Inlet flow paths 352 receive compressed air 36 from the plenum 42 defined within the compressor discharge case 40. The inlet flow paths 352 are defined between an interior surface 330 of the first side wall 326 and a fuel injection surface 346 of a first fuel injection body 340; between the fuel injection surface 348 of the first fuel injection body 340 and the fuel injection surface 346 of a second fuel injection body 340; and between the fuel injection surface 348 of the second fuel injection body and the respective interior surface 330 of the second side wall 326. While the inlet flow paths 352 are shown as being of uniform dimensions from the distal end 320 of the frame 304 to the proximal end 318 of the frame 304, it should be understood that the flow paths 352 may converge from the distal end 320 to the proximal end 318, thereby accelerating the flow. The inlet flow paths 352 intersect downstream of the trailing edge 344 of the fuel injection bodies 340 and upstream of the struts 360, which subsequently divide the flow into discrete, or separate, streams discharged from the outlet flow paths 311 at the distal end 324 of the outlet member 310.

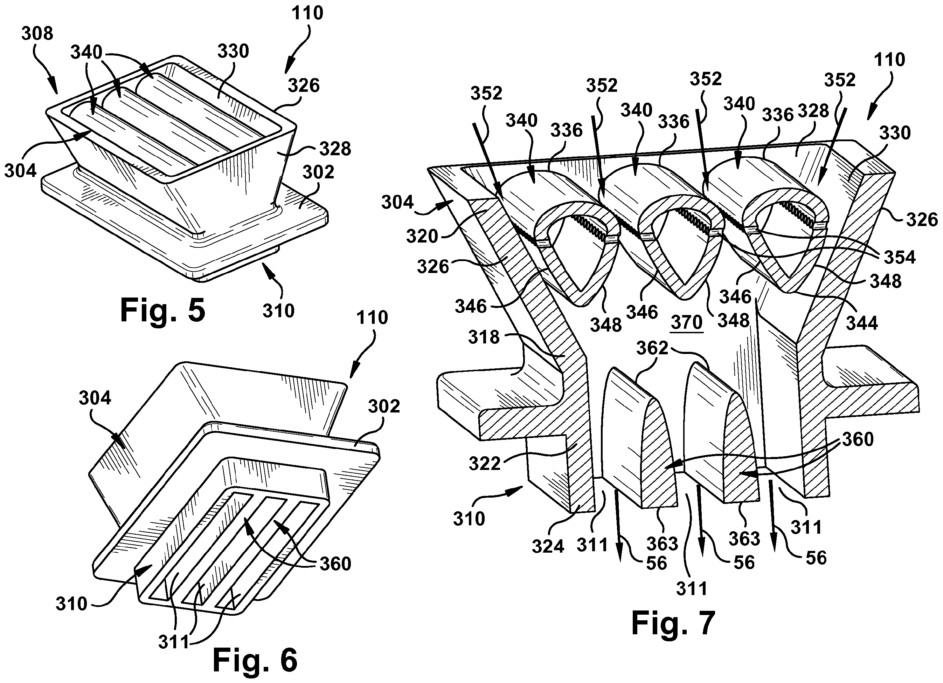

Notably, the fuel injector may have more than two fuel injection bodies 340 extending across the frame 304 in any suitable orientation that defines a suitable number of flow paths 352. For example, in the embodiment shown in FIGS. 5 through 12, the fuel injector 110 includes three adjacent fuel injection bodies 340 that define four spaced inlet flow paths 352 within the frame 304. In one embodiment, the flow paths 352 are equally spaced, as results from the fuel injection bodies 340 being oriented at the same angle with respect to the injection axis 312. Each fuel injection body 340 includes a plurality of fuel injection ports 354 on at least one fuel injection surface 346 or 348, as described above, such that the fuel injection ports 354 are in fluid communication with a respective plenum 350 defined within each fuel injection body 340. In turn, the plenums 350 are in fluid communication with the conduit fitting 332 (shown in FIG. 2), which receives fuel from the fuel supply line 104.

The fuel injector 110 includes an inlet portion 308 that is defined by the frame 304. The frame 304 includes the pair of oppositely disposed side walls 326 and the pair of oppositely disposed end walls 328, such that the frame 304 has a generally rectangular shape at a plane drawn parallel to the mounting flange 302. The fuel conduit fitting 332 (shown in FIG. 2) directs fuel into each of the three fuel injection bodies 340. Fuel is delivered from the fuel injection bodies 340, via the plurality of fuel injection ports 354, into one of four inlet flow paths 352 that are defined (left-to-right in FIG. 7) between an interior surface 330 of a first side wall 326 and a first fuel injection surface 346 of a first fuel injection body 340; between a second fuel injection surface 348 of the first fuel injection body 340 and a respective first fuel injection surface 346 of a second fuel injection body 340; between the respective second fuel injection surface 348 of the second fuel injection body 340 and a respective first fuel injection surface 346 of a third fuel injection body 340; and between a respective second fuel injection surface 348 of the third fuel injection body 340 and an interior surface 330 of the second side wall 326. The fuel injector 110 further includes an outlet member 310 like that shown in FIGS. 2 through 4. The outlet member 310 projects radially inward from the mounting flange 302 toward the combustor liner 12 (shown in FIG. 1). As illustrated, the inlet flow paths 352 are directed into a mixing chamber 370 upstream of the pair of aerodynamic-shaped struts 360. The shape of the struts 360, in conjunction with one another and the respective side walls of the outlet member 310, creates a series of outlet flow paths 311 that converge along the respective injection axis 312, thus accelerating the flow of the fuel/air mixture 56 out of the injector 110 (or 100) as parallel and axially aligned streams entering the combustion can 10.

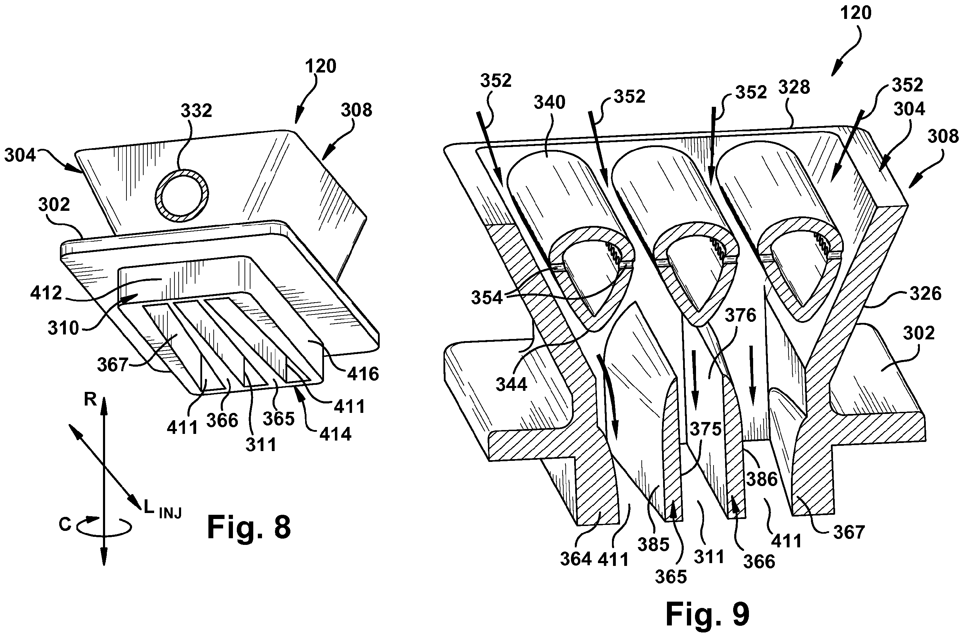

A variation of the injector 110 shown in FIGS. 5 through 7 is shown as fuel injector 120 in FIGS. 8 through 12. In one embodiment, the inlet portion 308 of the fuel injector 120 is identical to that shown in FIGS. 5 and 7. The outlet portion 310 defines a generally rectangular shape complementary to the shape of the inlet portion 308. The outlet portion 310 includes a leading edge end wall 412 and a trailing edge end wall 414, which are connected to respective outlet side walls 416. It maybe observed that a pair of struts 365, 366 extend longitudinally across the outlet member 310 from the leading edge end wall 412 to the trailing edge end wall 414, and a pair of flow diverters 364, 367 maybe disposed along the outlet side walls 416.

The struts 365, 366 are shaped differently from the aerodynamic struts 360 discussed previously, such that the streams of the fuel/air mixture 56 exiting the fuel injector 120 diverge away from the longitudinal axis of the injector (L*_{INJ}*) from the leading edge end wall 412 to the trailing edge end wall 414. That is, the outlet slots 311 proximate the outlet side walls 416 are inclined, or angled, relative to the (center) outlet slot 311 disposed along the injector longitudinal axis L*_{INJ}.*

Moreover, the struts 365, 366 include planar sides 375, 376 and arcuate sides 385, 386 that are joined at a strut leading edge and that taper from a narrow dimension at the leading edge end wall 412 to a wider dimension at the trailing edge end wall 414. The flow diverters 364, 367 have an opposing dimensional change and protrude a first (larger) distance into the outlet flow paths at the leading edge end 412 and protrude a second (smaller) distance into the flow paths at the trailing edge end 414. As a result, a first outlet flow path 311 is defined along the longitudinal axis L*_{INJ}* between the planar sides 375, 376 of the struts 365, 366. Additional flow paths 411 are defined between the arcuate side wall 385 of the strut 365 and the flow diverter 364 disposed along one of the outlet side walls 416 and between the arcuate side wall 386 of the strut 366 and the flow diverter 367 disposed along the opposite outlet side wall 416.

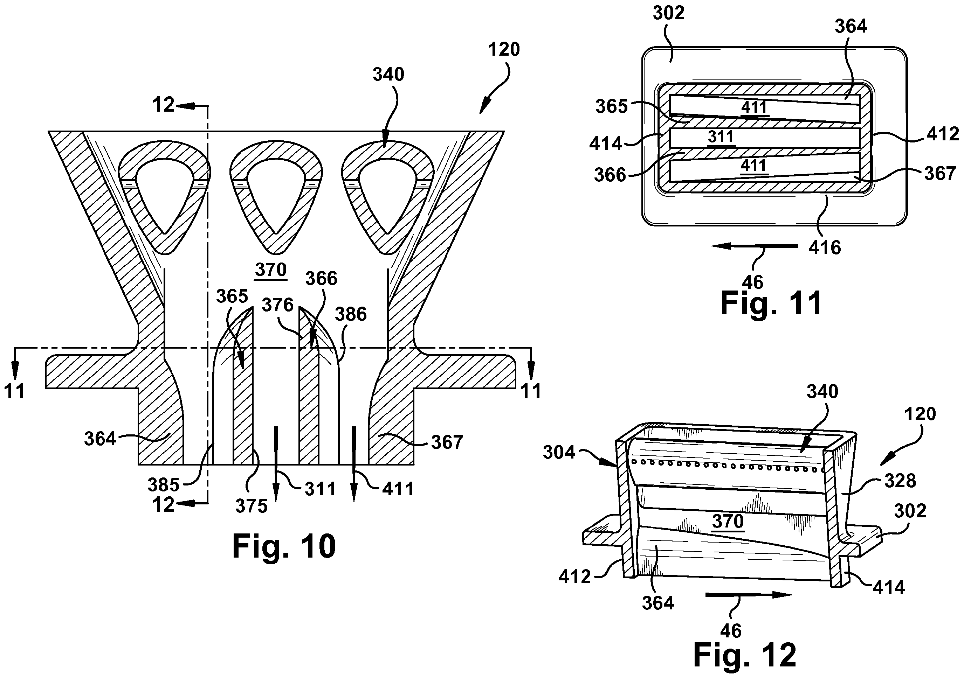

FIGS. 9 and 10 are cross-sectional views looking downstream toward the trailing edge end wall 414. FIG. 11 is a cross-sectional view of FIG. 10, as taken along line 11-11. In this view, the flow of combustion gases 46 from the primary combustion zone 50 moves in a right-to-left direction, as indicated by the arrow. FIG. 12 is a cross-sectional view of FIG. 10, as taken along line 12-12. In this view, the flow of combustion gases 46 from the primary combustion zone 50 moves in a left-to-right direction, as indicated by the arrow.

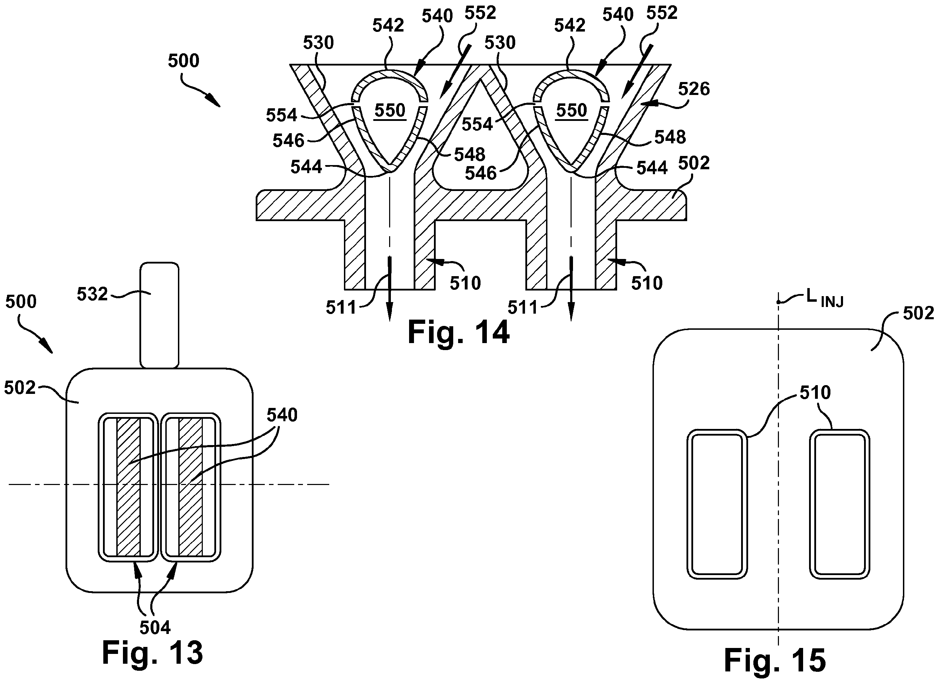

In the embodiments illustrated in FIGS. 2 through 12, the fuel injection bodies 340 are held within a common frame 304 and supply a fuel/air mixture through discrete flow paths 311 (411) in a common outlet member 310. However, it is possible to group two or more injectors 500, each having its own frame 504 and a single fuel injection body 540, to achieve similar results. Such embodiments are illustrated in FIGS. 13 through 19.

FIG. 13 provides a schematic overhead view of a fuel injector 500 having a pair of parallel, axially aligned frames 504, each frame 504 containing a single fuel injection body 540, which functions similarly to the fuel injection bodies 340 described herein. The frames 504 extend radially outward from a common, or shared, mounting flange 502, as shown in FIG. 14. The fuel injection bodies 540 include a leading edge 542, a trailing edge 544, and a pair of fuel injection surfaces 546, 548 connecting the leading edge 542 to the trailing edge 544. The fuel injection bodies 540 define therein a fuel plenum 550, which is in flow communication with a fuel conduit (not shown). Fuel from the fuel plenum 550 is delivered into a respective inlet flow path 352 defined between an interior surface 530 of a frame side wall 526 and a respective fuel injection surface 546, 548, via fuel injection ports 554 defined in the respective fuel injection surfaces 546, 548.

As shown in FIGS. 14 and 15, the fuel injector 500 includes a pair of parallel and axially aligned outlet members 510 that extend radially inward from the mounting flange 502 (relative to the longitudinal axis of the combustor). The fuel/air mixture is delivered along discrete and circumferentially spaced outlet flow paths 511.

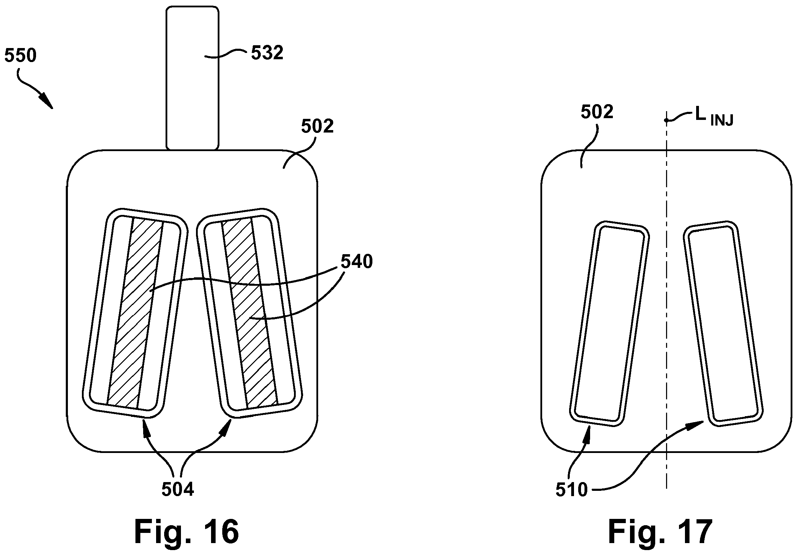

FIGS. 16 and 17 schematically illustrate a fuel injector 550 having a pair of frames 504, each frame 504 containing the fuel injection body 540 described above and extending radially outward from the common, or shared, mounting flange 502. In the fuel injector 550, the frames 504 (and, therefore, the fuel injection bodies 540 and the respective outlet members 510) are inclined relative to the longitudinal axis of the injector (L*_{INJ}*), such that the frames 504 are closer to one another at a leading edge of the fuel injector 550 and further apart at a trailing edge end of the fuel injector 550.

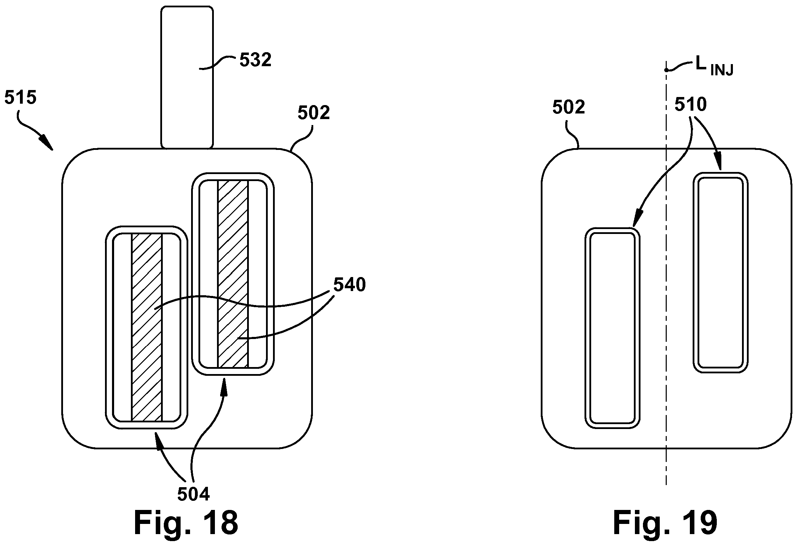

FIGS. 18 and 19 schematically illustrate a fuel injector 515 having a pair of frames 504, each frame containing the fuel injection body 540 described above and extending radially outward from the common, or shared, mounting flange 502. In the fuel injector 515, the frames 504 (and, therefore, the fuel injection bodies 520 and the respective outlet members 510) are parallel to one another and are axially offset relative to one another.

In any of the fuel injectors 500, 550, and 515 described above, although only two frames 504 and respective fuel injection bodies 540 are illustrated, it should be understood that multiple frames 504 may be joined to a common mounting flange 502. Moreover, the frames 504 and their respective outlet members 510 may be configured in parallel, axially staggered, and inclined configurations, or combinations thereof, as so desired.

Referring now to both the double- and triple-injection body fuel injectors (e.g., 100, 110) described herein, during certain operations of the combustion can 10, compressed gas flows into the frame 340 and through the flow paths 352. Simultaneously, fuel is conveyed through the fuel supply line 104 and through the conduit fitting 332 to the internal plenum(s) 350 of fuel injection bodies 340. Fuel passes from the plenum 350 through the fuel injection ports 354 on the fuel injection surfaces 346 and/or 348 of each fuel injection body 340, in a substantially radial direction relative to the injection axis 312, and into the inlet flow paths 352, where the fuel mixes with the compressed air. The fuel and the compressed air form the second fuel/air mixture 56, which is injected through the outlet slots 311 (and 411) of the outlet member 310 into the secondary combustion zone 60 (as shown in FIG. 1).

The present injectors with multiple outlet slots offer the following benefits over a comparable injector having a single outlet slot: increased flame surface area; enhanced mixing of the jets of the second fuel/air mixture into the combustion product stream; reduced liner length (due to enhanced mixing and more rapid combustion of the second fuel/air mixtures); and larger capacity for increased volumetric flow through the injectors (i.e., higher fuel/air splits with the fuel nozzles in the head end). It has been estimated that the present injectors provide levels of NOx emissions that are comparable with, or lower than, those associated with a similar injector having a single outlet slot. It should be appreciated that the exemplary injectors illustrated herein may be modified to optimize their performance without departing from the scope of the present disclosure. Characteristics that may be modified include the length of the outlet slots, the width of the outlet slots, the ratio of the length of the outlet slots versus the width of the outlet slots, the gap between adjacent outlet slots, the relative axial position of the outlet slots to one another, the relative inclination (angle) of the outlet slots to one another, and the corner radius of the outlet slots.

The systems described herein facilitate enhanced mixing of fuel and compressed gas in a combustor. More specifically, the present systems facilitate directing a fuel/air mixture through at least two outlet slots that are parallel or inclined relative to one another and that may be axially staggered, or off-set. Thus, the systems facilitate enhanced mixing of fuel and compressed gas in a fuel injector of an AFS system in a turbine assembly. The systems therefore facilitate improving the overall operating efficiency of a combustor such as, for example, a combustor in a turbine assembly. This increases the output and reduces the cost associated with operating a combustor such as, for example, a combustor in a turbine assembly.

Exemplary embodiments of fuel injectors and methods of fabricating the same are described above in detail. The systems described herein are not limited to the specific embodiments described herein, but rather, components of the systems may be utilized independently and separately from other components described herein. For example, the systems described herein may have other applications not limited to practice with turbine assemblies, as described herein. Rather, the systems described herein can be implemented and utilized in connection with various other industries.

## Claims

1. A fuel injector (100) for an axial fuel staging system (200) for delivering a mixture of fuel and air in a radial direction into a combustor of a gas turbine, comprising:
- a frame (304) having interior sides (330) defining an opening for passage of compressed air from a plenum defined within a compressor discharge case surrounding a combustor;
- a first fuel injection body (340) and a second fuel injection body (340), the first fuel injection body and the second fuel injection body being coupled to the frame and being positioned within the opening such that inlet flow paths (352) for the compressed air are defined at least between the interior sides of the frame and the first fuel injection body and between the interior sides of the frame and the second fuel injection body, wherein
the first fuel injection body defines a first fuel plenum (350), and
the second fuel injection body defines a second fuel plenum, and
each of the first fuel injection body and the second fuel injection body includes at least one fuel injection surface (348) defining a plurality of fuel injection holes (354) in communication with the respective first or second fuel plenum; and
- an outlet member (310) downstream of and in fluid communication with the inlet flow paths; wherein the outlet member is provided with discrete outlet flow paths (311) exiting the outlet member, wherein
- the outlet member (310) comprises a leading edge end wall, a trailing edge end wall, and a pair of outlet side walls connecting the leading edge end wall and the trailing edge end wall;
**characterized in that**
the outlet member further comprises a pair of struts (360) extending longitudinally from the leading edge end wall to the trailing edge end wall.

2. The fuel injector of Claim 1, further comprising a conduit fitting (332) coupled to the frame (304) and fluidly connected to the fuel plenum (350); and wherein the conduit fitting is fluidly connected to a fuel supply line (104).

3. The fuel injector of Claim 1 or 2, wherein the first fuel injection body (340) defines a first fuel plenum (350) therein, and the second fuel injection body (340) defines a second fuel plenum (350) therein; and wherein a conduit fitting (332) coupled to the frame is fluidly connected to the first fuel plenum and the second fuel plenum.

4. The fuel injector of Claim 1, wherein each strut of the pair of struts (360) comprises a shape diverging in a direction of flow through the fuel injector, each strut having a leading edge proximate at least one of the first fuel injection body and the second fuel injection body and a trailing edge opposite the leading edge.

5. The fuel injector of Claim 1 or 4, further comprising a third fuel injection body; and wherein a number of inlet flow paths is greater than a number of outlet flow paths.

6. The fuel injector of Claim 1, 4 or 5, wherein each strut of the pair of struts (360) comprises a planar surface and an arcuate surface, the planar surface and the arcuate surface being connected at a leading edge; and wherein the pair of struts is disposed with the planar surface of a first strut being adjacent the planar surface of a second strut to define a central outlet slot therebetween.

7. The fuel injector of Claim 5, wherein each strut of the plurality of struts tapers from a narrow dimension at the leading edge end wall to a wider dimension at the trailing edge end wall.

8. The fuel injector of Claim 7, further comprising a first flow diverter (364) disposed along a first outlet side wall of the pair of outlet side walls, and a second flow diverter (367) disposed along a second outlet side wall of the pair of outlet side walls; and wherein the first flow diverter and the second flow diverter protrude into the outlet flow paths (411).

9. The fuel injector of Claim 8, wherein the first flow diverter (364) and the second flow diverter (367) protrude a first distance into the outlet flow paths from the leading edge end wall to a second distance at the trailing edge end wall, the first distance being larger than the second distance; and wherein the outlet flow paths (311) comprise a center outlet flow path along a longitudinal axis of the fuel injector, a first outlet flow path inclined in a first direction relative to the longitudinal axis of the fuel injector, and a second outlet flow path inclined in a second direction relative to the longitudinal axis of the fuel injector.

10. The fuel injector of any preceding Claim, wherein the outlet member (310) is configured to produce the discrete outlet flow paths via a first outlet member defining a first uniform cross-sectional area to produce a first discrete stream and a second outlet member defining a second uniform cross-sectional area to produce a second discrete stream, the first outlet member being downstream of the first fuel injection body (340), and the second outlet member being downstream of the second fuel injection body (340).

11. The fuel injector of Claim 104-, wherein the frame (304) comprises a first frame within which first frame the first fuel injection body is positioned and a second frame within which second frame the second fuel injection body is positioned.

12. The fuel injector of Claim 10 or 11, wherein the first outlet member (310) is parallel to, and axially aligned with, the second outlet member.

13. The fuel injector of Claim 10 or 11, wherein the first outlet member and the second outlet member are inclined relative to a longitudinal axis of the fuel injector.

14. The fuel injector of Claim 10 or 11, wherein the first outlet member is parallel to, and axially offset from, the second outlet member.

## Patentansprüche

1. Kraftstoffinjektor (100) für ein axiales Kraftstoffstufungssystem (200) zum Zuführen einer Mischung aus Kraftstoff und Luft in einer radialen Richtung in eine Brennkammer einer Gasturbine, umfassend:
- einen Rahmen (304) mit Innenseiten (330), die eine Öffnung für den Durchgang von Druckluft aus einer Kammer definieren, die innerhalb eines Verdichterauslassgehäuses definiert ist, das eine Brennkammer umgibt;
- einen ersten Kraftstoffinjektionskörper (340) und einen zweiten Kraftstoffinjektionskörper (340), wobei der erste Kraftstoffinjektionskörper und der zweite Kraftstoffinjektionskörper mit dem Rahmen gekoppelt sind und innerhalb der Öffnung so positioniert sind, dass Einlassströmungswege (352) für die Druckluft mindestens zwischen den Innenseiten des Rahmens und dem ersten Kraftstoffinjektionskörper und zwischen den Innenseiten des Rahmens und dem zweiten Kraftstoffinjektionskörper definiert sind, wobei
der erste Kraftstoffinjektionskörper eine erste Kraftstoffkammer (350) definiert, und
der zweite Kraftstoffinjektionskörper eine zweite Kraftstoffkammer definiert, und
jeder von dem ersten Kraftstoffinjektionskörper und dem zweiten Kraftstoffinjektionskörper mindestens eine Kraftstoffinjektionsfläche (348) einschließt, die eine Vielzahl von Kraftstoffinjektionslöchern (354) in Verbindung mit der jeweiligen ersten oder zweiten Kraftstoffkammer definiert; und
- ein Auslasselement (310) stromabwärts von und in Fluidverbindung mit den Einlassströmungswegen; wobei das Auslasselement mit separaten Auslassströmungswegen (311) versehen ist, die aus dem Auslasselement austreten, wobei
- das Auslasselement (310) eine Vorderkantenendwand, eine Hinterkantenendwand und ein Paar Auslassseitenwände, die die Vorderkantenendwand und die Hinterkantenendwand verbinden, umfasst;
**dadurch gekennzeichnet, dass**
das Auslasselement ferner ein Paar Streben (360) umfasst, die sich in Längsrichtung von der Vorderkantenendwand zu der Hinterkantenendwand erstrecken.

2. Kraftstoffinjektor nach Anspruch 1, ferner umfassend ein Leitungsanschlussstück (332), das mit dem Rahmen (304) gekoppelt und mit der Kraftstoffkammer (350) fluidtechnisch verbunden ist; und wobei das Leitungsanschlussstück fluidtechnisch mit einer Kraftstoffversorgungsleitung (104) verbunden ist.

3. Kraftstoffinjektor nach Anspruch 1 oder 2, wobei der erste Kraftstoffinjektionskörper (340) eine erste Kraftstoffkammer (350) darin definiert und der zweite Kraftstoffinjektionskörper (340) eine zweite Kraftstoffkammer (350) darin definiert; und wobei ein Leitungsanschlussstück (332), das mit dem Rahmen gekoppelt ist, fluidtechnisch mit der ersten Kraftstoffkammer und der zweiten Kraftstoffkammer verbunden ist.

4. Kraftstoffinjektor nach Anspruch 1, wobei jede Strebe des Strebenpaars (360) eine Form umfasst, die in einer Strömungsrichtung durch den Kraftstoffinjektor auseinanderläuft, wobei jede Strebe eine Vorderkante in der Nähe mindestens des ersten Kraftstoffinjektionskörpers und des zweiten Kraftstoffinjektionskörpers und eine Hinterkante gegenüber der Vorderkante aufweist.

5. Kraftstoffinjektor nach Anspruch 1 oder 4, ferner umfassend einen dritten Kraftstoffinjektionskörper; und wobei eine Anzahl von Einlassströmungswegen größer als eine Anzahl von Auslassströmungswegen ist.

6. Kraftstoffinjektor nach Anspruch 1, 4 oder 5, wobei jede Strebe des Strebenpaars (360) eine planare Oberfläche und eine bogenförmige Oberfläche umfasst, wobei die planare Oberfläche und die bogenförmige Oberfläche an einer Vorderkante verbunden sind; und wobei das Strebenpaar so angeordnet ist, dass die planare Oberfläche einer ersten Strebe an die planare Oberfläche einer zweiten Strebe angrenzt, um dazwischen einen zentralen Auslassschlitz zu definieren.

7. Kraftstoffinjektor nach Anspruch 5, wobei jede Strebe der Vielzahl von Streben von einer schmalen Abmessung an der Vorderkantenendwand zu einer breiteren Abmessung an der Hinterkantenendwand abgeschrägt ist.

8. Kraftstoffinjektor nach Anspruch 7, ferner umfassend einen ersten Strömungsumlenker (364), der entlang einer ersten Auslassseitenwand des Paars Auslassseitenwände angeordnet ist, und einen zweiten Strömungsumlenker (367), der entlang einer zweiten Auslassseitenwand des Paars Auslassseitenwände angeordnet ist; und wobei der erste Strömungsumlenker und der zweite Strömungsumlenker in die Auslassströmungswege (411) hineinragen.

9. Kraftstoffinjektor nach Anspruch 8, wobei der erste Strömungsumlenker (364) und der zweite Strömungsumlenker (367) um eine erste Strecke von der Vorderkantenendwand zu einer zweiten Strecke an der Hinterkantenendwand in die Auslassströmungswege vorstehen, wobei die erste Strecke größer als die zweite Strecke ist; und wobei die Auslassströmungswege (311) einen zentralen Auslassströmungsweg entlang einer Längsachse des Kraftstoffinjektors, einen ersten Auslassströmungsweg, der in einer ersten Richtung relativ zu der Längsachse des Kraftstoffinjektors geneigt ist, und einen zweiten Auslassströmungsweg, der in einer zweiten Richtung relativ zu der Längsachse des Kraftstoffinjektors geneigt ist, umfassen.

10. Kraftstoffinjektor nach einem der vorstehenden Ansprüche, wobei das Auslasselement (310) konfiguriert ist, um die separaten Auslassströmungswege über ein erstes Auslasselement, das eine erste gleichmäßige Querschnittsfläche definiert, um einen ersten separaten Strom zu erzeugen, und ein zweites Auslasselement, das eine zweite gleichmäßige Querschnittsfläche definiert, um einen zweiten separaten Strom zu erzeugen, zu erzeugen, wobei sich das erste Auslasselement stromabwärts des ersten Kraftstoffinjektionskörpers (340) befindet und sich das zweite Auslasselement stromabwärts des zweiten Kraftstoffinjektionskörpers (340) befindet.

11. Kraftstoffinjektor nach Anspruch 10, wobei der Rahmen (304) einen ersten Rahmen, wobei in dem ersten Rahmen der erste Kraftstoffinjektionskörper positioniert ist, und einen zweiten Rahmen, wobei in dem zweiten Rahmen der zweite Kraftstoffinjektionskörper positioniert ist, umfasst.

12. Kraftstoffinjektor nach Anspruch 10 oder 11, wobei das erste Auslasselement (310) parallel zu und dem zweiten Auslasselement axial daran ausgerichtet ist.

13. Kraftstoffinjektor nach Anspruch 10 oder 11, wobei das erste Auslasselement und das zweite Auslasselement relativ zu einer Längsachse des Kraftstoffinjektors geneigt sind.

14. Kraftstoffinjektor nach Anspruch 10 oder 11, wobei das erste Auslasselement parallel zu dem zweiten Auslasselement und axial davon versetzt ist.

## Revendications

1. Injecteur de carburant (100) pour un système d'étagement de carburant axial (200) pour délivrer un mélange de carburant et d'air dans une direction radiale dans une chambre de combustion d'une turbine à gaz, comprenant :
- un cadre (304) ayant des côtés intérieurs (330) définissant une ouverture pour un passage d'air comprimé à partir d'une chambre de distribution définie au sein d'un boîtier de refoulement de compresseur entourant une chambre de combustion ;
- un premier corps d'injection de carburant (340) et un deuxième corps d'injection de carburant (340), le premier corps d'injection de carburant et le deuxième corps d'injection de carburant couplés au cadre et étant positionnés au sein de l'ouverture de telle sorte que des chemins d'écoulement d'entrée (352) pour l'air comprimé sont définis au moins entre les côtés intérieurs du cadre et le premier corps d'injection de carburant et entre les côtés intérieurs du cadre et le deuxième corps d'injection de carburant, dans lequel
le premier corps d'injection de carburant définit une première chambre de distribution de carburant (350), et
le deuxième corps d'injection de carburant définit une deuxième chambre de distribution de carburant, et
chacun du premier corps d'injection de carburant et du deuxième corps d'injection de carburant inclut au moins une surface d'injection de carburant (348) définissant une pluralité de trous d'injection de carburant (354) en communication avec la première ou deuxième chambre de distribution de carburant respective ; et
- un élément de sortie (310) en aval de et en communication fluidique avec les chemins d'écoulement d'entrée ; dans lequel l'élément de sortie est pourvu de chemins d'écoulement de sortie distincts (311) quittant l'élément de sortie, dans lequel
- l'élément de sortie (310) comprend une paroi d'extrémité de bord d'attaque, une paroi d'extrémité de bord de fuite, et une paire de parois latérales de sortie reliant la paroi d'extrémité de bord d'attaque et la paroi d'extrémité de bord de fuite ;
**caractérisé en ce que**
l'élément de sortie comprend en outre une paire de traverses (360) s'étendant longitudinalement à partir de la paroi d'extrémité de bord d'attaque jusqu'à la paroi d'extrémité de bord de fuite.

2. Injecteur de carburant selon la revendication 1, comprenant en outre un raccord de conduit (332) couplé au cadre (304) et relié fluidiquement à la chambre de distribution de carburant (350) ; et dans lequel le raccord de conduit est relié fluidiquement à une ligne d'alimentation en carburant (104).

3. Injecteur de carburant selon la revendication 1 ou 2, dans lequel le premier corps d'injection de carburant (340) définit une première chambre de distribution de carburant (350) en son sein, et le deuxième corps d'injection de carburant (340) définit une deuxième chambre de distribution de carburant (350) en son sein ; et dans lequel un raccord de conduit (332) couplé au cadre est relié fluidiquement à la première chambre de distribution de carburant et à la deuxième chambre de distribution de carburant.

4. Injecteur de carburant selon la revendication 1, dans lequel chaque traverse de la paire de traverses (360) comprend une forme divergeant dans une direction d'écoulement à travers l'injecteur de carburant, chaque traverse ayant un bord d'attaque à proximité d'au moins l'un du premier corps d'injection de carburant et du deuxième corps d'injection de carburant et un bord de fuite opposé au bord d'attaque.

5. Injecteur de carburant selon la revendication 1 ou 4, comprenant en outre un troisième corps d'injection de carburant ; et dans lequel un nombre de chemins d'écoulement d'entrée est supérieur à un nombre de chemins d'écoulement de sortie.

6. Injecteur de carburant selon la revendication 1, 4 ou 5, dans lequel chaque traverse de la paire de traverses (360) comprend une surface plane et une surface arquée, la surface plane et la surface arquée étant reliées au niveau d'un bord d'attaque ; et dans lequel la paire de traverses est disposée avec la surface plane d'une première traverse étant adjacente à la surface plane d'une deuxième traverse pour définir une fente de sortie centrale entre elles.

7. Injecteur de carburant selon la revendication 5, dans lequel chaque traverse de la pluralité de traverses s'effile d'une dimension étroite au niveau de la paroi d'extrémité de bord d'attaque jusqu'à une dimension plus large au niveau de la paroi d'extrémité de bord de fuite.

8. Injecteur de carburant selon la revendication 7, comprenant en outre un premier déflecteur d'écoulement (364) disposé le long d'une première paroi latérale de sortie de la paire de parois latérales de sortie, et un deuxième déflecteur d'écoulement (367) disposé le long d'une deuxième paroi latérale de sortie de la paire de parois latérales de sortie ; et dans lequel le premier déflecteur d'écoulement et le deuxième déflecteur d'écoulement font saillie dans les chemins d'écoulement de sortie (411).

9. Injecteur de carburant selon la revendication 8, dans lequel le premier déflecteur d'écoulement (364) et le deuxième déflecteur d'écoulement (367) font saillie d'une première distance dans les chemins d'écoulement de sortie à partir de la paroi d'extrémité de bord d'attaque jusqu'à une deuxième distance au niveau de la paroi d'extrémité de bord de fuite, la première distance étant supérieure à la deuxième distance ; et dans lequel les chemins d'écoulement de sortie (311) comprennent un chemin d'écoulement de sortie central le long d'un axe longitudinal de l'injecteur de carburant, un premier chemin d'écoulement de sortie incliné dans une première direction par rapport à l'axe longitudinal de l'injecteur de carburant, et un deuxième chemin d'écoulement de sortie incliné dans une deuxième direction par rapport à l'axe longitudinal de l'injecteur de carburant.

10. Injecteur de carburant selon une quelconque revendication précédente, dans lequel l'élément de sortie (310) est configuré pour produire les chemins d'écoulement de sortie distincts par l'intermédiaire d'un premier élément de sortie définissant une première section transversale uniforme pour produire un premier courant distinct et un deuxième élément de sortie définissant une deuxième section transversale uniforme pour produire un deuxième courant distinct, le premier élément de sortie étant en aval du premier corps d'injection de carburant (340), et le deuxième élément de sortie étant en aval du deuxième corps d'injection de carburant (340).

11. Injecteur de carburant selon la revendication 10, dans lequel le cadre (304) comprend un premier cadre, premier cadre au sein duquel le premier corps d'injection de carburant est positionné et un deuxième cadre, deuxième cadre au sein duquel le deuxième corps d'injection de carburant est positionné.

12. Injecteur de carburant selon la revendication 10 ou 11, dans lequel le premier élément de sortie (310) est parallèle à, et aligné axialement avec, le deuxième élément de sortie.

13. Injecteur de carburant selon la revendication 10 ou 11, dans lequel le premier élément de sortie et le deuxième élément de sortie sont inclinés par rapport à un axe longitudinal de l'injecteur de carburant.

14. Injecteur de carburant selon la revendication 10 ou 11, dans lequel le premier élément de sortie est parallèle au, et axialement décalé du, deuxième élément de sortie.
